# EUROPEAN PATENT APPLICATION

(11) **EP 3 872 030 A1**
(43) Date of publication of application: **01.09.2021**
(21) Application number: 20382135.0
(22) Date of filing: 26.02.2020
(51) Int. Cl.: C01B 32/00

(54) **PROCESS FOR PREPARING MESOPOROUS CARBON MATERIAL**

(71) Applicant: Acondicionamiento Tarrasense, 08225 Terrassa Barcelona (ES)
(72) Inventor: Amantia, David, 08225 Terrassa (Barcelona) (ES); Uriburu Gray, Maria, 08225 Terrassa (Barcelona) (ES); Pinar Serrano, Aranzazu, 08225 Terrassa (Barcelona) (ES); Martínez Crespiera, Sandra, 08225 Terrassa (Barcelona) (ES); Aubouy, Laurent, 08225 Terrassa (Barcelona) (ES)
(74) Representative: Gallego Jiménez, José Fernando

(57) **Abstract**

The present invention relates to a process for preparing mesoporous carbon material from starch or a combination of starches, which comprises the use of an ionic liquid for dispersing the starch, isolation of the solvated starch, and carbonization thereof. It relates also to the carbon material obtained or obtainable according to that process. It further relates to the use of that carbon material, in particular, in separation, filtration, trapping, catalysis, energy storage, energy generation, and in composites.

## Description

### Technical Field

The present invention relates to a process for preparing mesoporous carbon material.

### Background art

Mesoporous materials include some kinds of silica and alumina, as well as mesoporous oxides of metals such as niobium, tantalum zirconium or cerium.

Mesoporous carbon is one of the most common mesoporous materials. It shows an increased specific surface area, and it has direct applications in energy storage devices, as well as in adsorption procedures and chemical reactions. The largest volume use of activated carbons is in water treatment with other important applications including gas purification, decolourisation and adsorbency. More speciality, small volume uses include catalysis, electrochemistry including fuel cells, biomedical devices, hydrogen storage, personal protection and automotive components. Activated carbons are used in different physical forms including powders, beads, cloths and monoliths.

Mesoporous materials are valuable to the life sciences because the larger pore size in comparison with microporous materials allows for a more suitable environment and better mass transfer for biologically active agents. Much of the prior art involving the immobilization of biologically active agents in porous materials involves use of microporous materials, not mesoporous materials. Biologically active agents previously have been bound to microporous materials, but the pore diameters result in steric hindrance and mass transfer limitations on the use of such materials in biological reactions.

In prior art several processes to prepare mesoporous carbon from different starting materials have been disclosed.

Activated carbon can be obtained from low cost natural raw materials such as coconut, coal, lignite or wood. However, the final product contains high levels of impurities, the porosity is variable, and the available physical forms are limited.

For example, in WO-A-2007/126118 it is disclosed a process for preparing a macroporous carbon material in which wood powder is heated and carbonized in an inert gas atmosphere, and afterwards is further heated in air to obtain a mesoporous carbon material.

In CN-A-109516548 it is disclosed a process for preparing mesoporous carbon by carbonizing saw dust as raw material in the presence of phosphoric acid, which promotes the hydrolysis of cellulose and other high glycans, form oligosaccharides or monosaccharide products, and then penetrate into the structure of biomass to activate the dehydration of the product.

In CN-A-103359729 it is disclosed a process for preparing mesoporous activated carbon in a two steps process. In the first step, carbonization of biomass, such as glucose, cellulose, lignin or bamboo powder, is carried out under low temperature and normal pressure in the presence of an acid ionic liquid or of an ionic liquid a surfactant. In the second step, carbonization of the primary carbonization product is carried out under a flow of carbon dioxide and a temperature of 500 °C.

Another approach to prepare mesoporous carbon uses synthetic polymers, which after carbonisation under specific conditions yield the activated carbon.

For example, in EP-A-0707886 it is disclosed a process for preparing a porous carbonaceous material, which comprises the carbonization of an extruded mixture of phenol-formaldehyde resin powder and carbon powder.

The use of phenol-formaldehyde resins for preparing a porous carbon material in combination with ionic liquids is also disclosed in CN-A-102659093 and CN-A-102862982. The use of resorcinol-formaldehyde resin is disclosed in WO-A-01/19904. The use of a polymer made of a hydroxylated benzene and an aldehyde is disclosed in US-A-2003/0153636. In US-A-2013/0183511 it is disclosed a method for preparing mesoporous carbon composite comprising subjecting a precursor composition to a curing step followed by a carbonization step, wherein the precursor comprises a bock copolymer, a phenolic component, a crosslinkable aldehyde component, an acid catalyst, and conductive carbon nanoparticles.

In WO-A-2008/043982 it is disclosed a process for preparing an activated carbon product having macropores, mesopores and micropores by carbonizing a carbon material, such as beads of phenolic resin, in an atmosphere substantially free of oxygen provided by a counter-current of steam or carbon dioxide.

Another approach is the use of mesoporous templates. In the case of an inorganic template, an organic material is adsorbed into the pores, followed by carbonization of the organic material, and dissolution of the inorganic template material.

For example, in US-A-2007/0116624 it is disclosed a method of preparing a mesoporous carbon, which comprises mixing a carbon precursor (e.g. carbohydrates, furfuryl alcohol, divinylbenzene, phenol-formaldehyde, resorcinol-formaldehyde, phenanthrene and anthracene), an acid, and a solvent to obtain a carbon precursor mixture; impregnating an ordered mesoporous silica (OMS) with the carbon precursor mixture; carbonizing the impregnated OMS; and removing the mesoporous silica from the OMS-carbon composite.

In US-A-2003/0108785 it is disclosed a method for preparing meso- and microporous carbon material by using air bubbles as template, surrounded by a material, such as a polymer, oligomer, or non-polymeric organic material, which is further converted to carbon.

Another approach is the use of carbohydrates as raw material for preparing mesoporous carbon.

In WO-A-2007/104798 it is disclosed a method of preparing a mesoporous carbonaceous material comprising carbonisation of a polysaccharide material, wherein the polysaccharide material comprises one or more expanded retrograded high surface area starches, whose preparation involves the steps of gelatinising the starch in the presence of water to give a starch/water gel, allowing the starch to retrograde, and exchanging the water in the retrograded starch gel with a water miscible non-solvent for starch, which has a lower surface tension than water.

In US-2005/0207962 it is disclosed a process for preparing a porous carbon material, which includes curing a mixture comprising a carbohydrate (e.g. glucose, fructose, maltose, sucrose, galactose, corn syrup, high-fructose corn syrup, starch, cellulose, and lactose, glyceraldehydes, dihydroxyacetone, or cellobiose), a dehydrating component (e.g. an acid such as sulfuric, phosphoric, sulfurous, phosphorous, chlorous, hypochlorous, hypobromous, hypoiodous, periodic, perchloric, nitric, nitrous, iodic, hydrochloric, toluenesulfonic, oxalic, and methanesulfonic), and a non-metallic cationic pore-forming agent (e.g. tetraalkylammonium halide salt), and carbonizing the cured carbon.

Despite the various proposals available in the state of the art, there is still a need to provide a simple process for preparing mesoporous carbon material from renewable resources.

### Object of the invention

The object of the present invention is a process for preparing mesoporous carbon material.

Another aspect of the invention is the carbon material obtainable according to that process.

Another aspect of the invention is the use of that carbon material.

### Brief Description of the Drawing

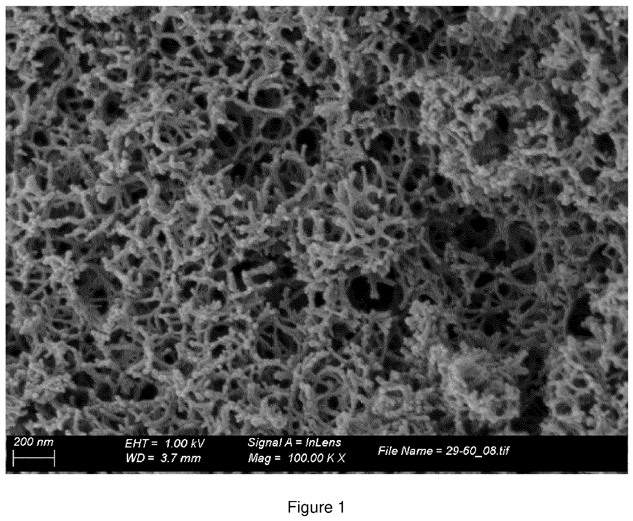

Figure 1 is a HRSEM image of the mesoporous carbon material obtained according to the process disclosed in Example 1.

### Detailed description of the invention

The object of the present invention is a process for preparing mesoporous carbon material, which comprises:
a) dispersing a starch or a combination of starches in an ionic liquid to obtain a dispersion,
b) precipitating the starch or the combination of starches by of addition of water and subsequently a water-soluble solvent to the dispersion obtained in step a),
c) isolating the precipitate obtained in step b), and
d) carbonizing the isolated precipitate obtained in step c).

In a preferred embodiment, the process consists essentially of the steps a), b) c) and d). In a more preferred embodiment, the process consists of the steps a), b) c) and d).

The authors of the present invention have developed a process, which surprisingly is suitable to provide mesoporous carbon materials from renewable resources in a simple way and suitable to be implemented in an industrial plant. The obtained mesoporous carbon materials show outstanding features regarding BET specific surface area, total pore volume and percentage of mesoporosity.

In the present description, as well as in the claims, the singular forms "a", "an" and "the" include the plural reference unless the context clearly indicates otherwise. The ranges defined by the preposition "between" include also the two ends thereof. The percentages are expressed as weight% (wt.%), unless otherwise indicated.

In the present description, a mesoporous material is a material containing pores with diameters between 2 and 50 nm, according to IUPAC nomenclature. Microporous material is defined as a material having pores smaller than 2 nm in diameter and macroporous material as a material having pores larger than 50 nm.

In the present description, room temperature is the range of usual air temperature, which is considered between 20 °C and 25.5 °C, preferably between 20 °C and 22 °C.

### Dispersion

The first step in the process of the invention is dispersing the starch or combination of starches in an ionic liquid.

The dispersion of the starch or combination of starches in an ionic liquid is usually carried out under mechanical stirring. Generally, the dispersion takes place at a temperature of between about 60 °C and about 100 °C, preferably between about 70 °C and about 98 °C, more preferably between about 85 °C and about 95 °C, and yet more preferably between about 90 °C and about 95 °C.

Usually the dispersion is accomplished between 1 and 10 h, preferably between 3 and 9 h, more preferably between 4 and 8 h, more preferably between 5 and 7 h, and yet more preferably about 6 hours.

In a preferred embodiment the dispersion takes place under mechanical stirring at a temperature of about 95 °C and during about 6 h.

### Starch

Starch is the renewable raw material used in the process of the invention for preparing mesoporous carbon material. The term "starch" refers both to a specific starch and to a combination of starches.

Starch is a polymeric carbohydrate consisting of numerous glucose units joined by glycosidic bonds. It is produced by most green plants as energy storage. It is the most common carbohydrate in human diets and is contained in large amounts in staple foods like potatoes, wheat, maize (corn), rice, and tapioca. Pure starch is a white, tasteless and odourless powder that is insoluble in cold water or ethanol. It consists of two types of molecules: the linear and helical amylose and the branched amylopectin. Depending on the plant, starch typically contains between 20 and 25 wt.% amylose and between 75 and 80 wt.% amylopectin. For example, the content of starch is about 17 wt.% in tapioca and rice, about 22 wt.% in maize and potato, and 24 wt.% in wheat.

Examples of suitable starches include maize (corn) starch, potato starch, wheat starch, rice starch, and tapioca starch.

In a preferred embodiment, it is used maize starch.

There are starches, for example maize starch, having a higher amylose content, such us between about 50 wt.% and about 70 wt.%, which can be obtained, for example, from corn kernels by means of a milling and purification process. Starches having high amylose content are commercially available through the company Ingredion under the trade name of Hylon®, e.g. Hylon® V (about 55 wt.%), Hylon® VII (about 70 wt.%).

In a preferred embodiment, it is used a combination of maize starch and a high amylose maize starch.

In a preferred embodiment the starch is selected from maize starch, potato starch, wheat starch, tapioca starch, high amylose maize starch, and mixtures thereof. In a more preferred embodiment, the starch is selected from maize starch, high amylose maize starch, and mixtures thereof.

Preferably the starch or combination of starches has an amylose content of at least 20 wt.%, more preferably at least 30 wt.%, more preferably at least 60 wt.%, and yet more preferably between 60 wt.% and 70 wt.%.

### Ionic liquid

Starch is dispersed in an ionic liquid. In the context of the present invention, an ionic liquid is a salt in the liquid state, wherein the salt has a low melting point, preferably below 100 °C.

The ionic liquid contains at least one carbon-nitrogen unsaturated bond in either or both of the cationic and anionic portions of the ionic liquid. The ionic liquid can conveniently be expressed by the general formula (X⁺) (Y⁻), wherein X⁺ represents the cationic portion and Y⁻ represents the anionic portion of the ionic liquid. The formula (X⁺) (Y⁻) is meant to encompass a cationic component having any valency of positive charge, and an anionic component having any valency of negative charge, provided that the charge contributions from the cationic portion and anionic portion are counterbalanced in order for charge neutrality to be preserved in the ionic liquid molecule. More specifically, the ionic liquid has the general formula (X⁺) (Y⁻) is meant to encompass the more generic formula (X^{+a})ₓ (Y^{-b} )_{y} , wherein the variables a and b are, independently, non-zero integers, and the subscript variables x and y are, independently, non-zero integers, such that a·x=b·y, and at least one of X⁺ or Y⁻ possesses at least one carbon-nitrogen unsaturated bond.

In one embodiment, the X⁺ portion of the ionic liquid includes a nitrogen-containing ring. The nitrogen-containing ring can be, for example, saturated or unsaturated, and either monocyclic, bicyclic, or polycyclic, and contain one, two, three, four, or larger number of nitrogen atoms. Some examples of nitrogen-containing rings include azacyclopropyl (aziridinyl or dimethyleneiminyl), azacyclobutyl (azetidinyl or trimethyleneiminyl), pyrrolidinyl, pyrrolyl, imidazolyl, imidazolidinyl, oxazolyl, pyrazolyl, piperidinyl, piperazinyl, morpholinyl, pyridinyl, pyrimidinyl, pyrazinyl, triazinyl, triazacyclohexyl, azacycloheptyl (homopiperidinyl), azacylooctyl, indolyl, benzimidazolyl, purinyl, quinolinyl, decahydroquinolinyl, and bipyridyl rings.

In a particular embodiment, X⁺ of the ionic liquid includes an imidazolium ring. The imidazolium ring can be substituted at any one, two, three, four, or five of the positions of the ring, e.g., by one, two, three, four, or five hydrocarbon groups, heteroatom groups, and/or heteroatom-substituted hydrocarbon groups on any one, two, three, four or five of the 1, 2, 3, 4, and 5 positions of the imidazolium ring.

The counteranion species Y⁻ can be any anionic species that, when complexed with the species X⁺, results in an ionic liquid. For example, in different embodiments, the corresponding species Y⁻ can be inorganic or organic, contain fluorine atoms or lack fluorine atoms, and be either symmetrical or asymmetrical in structure. Some examples of common anionic species considered in the present invention for Y⁻ include, for example, halides (e.g., fluoride, chloride, bromide, and iodide), carbonate, bicarbonate, carboxylates (e.g., formate, acetate, propionate, butyrate, valerate, lactate, pyruvate, oxalate, malonate, glutarate, adipate, decanoate, and fluorocarboxylates, e.g., trifluoroacetate), hexafluorophosphate, hexachlorophosphate, perchlorate, chlorate, chlorite, perbromate, bromate, bromite, periodiate, iodate, alkoxides (e.g., methoxide, ethoxide, isopropoxide, phenoxide, and fluoroalkoxides), amides (e.g., dimethylamide and diisopropylamide), diketonates (e.g., acetylacetonate), aluminum halides, nitrate, nitrite, sulfate, bisulfate, sulfite, bisulfate, the sulfonates, phosphate, hydrogenphosphate, dihydrogenphosphate, pyrophosphate, phosphite, arsenate, hydrogenarsenate, dihydrogenarsenate, selenate, tellurate, tungstate, molybdate, chromate, silicate, and borates.

In a preferred embodiment, the anionic part Y⁻ of the ionic liquid is selected from halides, carboxylates, hexafluophosphate, more preferably from halides and carboxylates, more preferably from chloride, bromide, and acetate, and yet more preferably from chloride and acetate. In a more preferred embodiment, it is chloride.

The ionic liquid is usually selected from the group consisting of 1-butyl-3-methylimidazolium chloride (BMIMCI), 1-butyl-3-methylimidazolium acetate (BMIMAc), 1-butyl-3-methylimidazolium bromide, 1-butyl-3-methylimidazolium methyl sulfate, 1-butyl-3-methylimidazolium hexafluorophosphate, 1-butyl-3-methylimidazolium tetrafluoroborate, 1-butyl-3-methylimidazolium bis(trifluoromethylsulfonyl)imide, 1-butyl-3-methylimidazolium octyl sulfate, 1-butyl-2,3-dimethylimidazolium chloride, 1-butyl-2,3-dimethylimidazolium tetrafluoroborate, 1-ethyl-3-methylimidazolium chloride (EMIMCI), 1-ethyl-3-methylimidazolium acetate (EMIMAc), 1-ethyl-3-methylimidazolium 1,1,2,2-tetrafluoroethanesulfonate, 1-ethyl-3-methylimidazolium bis(trifluoromethylsulfonyl)imide, 1-ethyl-3-methylimidazolium trifluoromethanesulfonate, 1-methyl-3-octylimidazolium chloride, 1-hexyl-3-methylimidazolium chloride, 1-hexyl-3-methylimidazolium bis(trifluormethylsulfonyl)imide, 1-hexyl-3-methylimidazolium hexafluorophosphate1,3-diethoxyimidazolium bis(trifluoromethylsulfonyl)imide, 1,3-dimethoxyimidazolium hexafluorophosphate, 1,3-dimethoxy-2-methylimidazolium bis(trifluoromethylsulfonyl)imide, 1,3-dimethoxy-2-methylimidazolium hexafluorophosphate, 1,3-dihydroxy-2-methylimidazolium bis(trifluoromethylsulfonyl)imide. Preferably it is selected from 1-butyl-3-methylimidazolium chloride (BMIMCI), 1-butyl-3-methylimidazolium acetate (BMIMAc), 1-ethyl-3-methylimidazolium chloride (EMIMCI), and 1-ethyl-3-methylimidazolium acetate (EMIMAc), more preferably it is selected from 1-butyl-3-methylimidazolium chloride (BMIMCI), 1-butyl-3-methylimidazolium acetate (BMIMAc), and yet more preferably it is 1-butyl-3-methylimidazolium chloride (BMIMCI).

In the dispersion process, the content of starch or combination of starches in the dispersion is between 5 wt.% and 50 wt.%, preferably between 10 wt.% and 40 wt.%, more preferably between 15 wt.% and 30 wt.%, and yet more preferably between 20 wt.% and 25 wt.%. In particular embodiments of the invention, the content is about 5, 10, 15, 20 or 25 wt.%.

In the process of the invention, the ionic liquid may be recovered and recycled in further batches of the process maintaining substantially the features (S_{BET}, Total pore volume, and % of mesoporosity) of the mesoporous carbon material. Recycling may be done at least 3 times.

### Precipitation

The process of the present invention comprises the step of precipitating the starch or a combination of starches by adding water to the dispersion thereof in the ionic liquid and subsequently adding a water-soluble solvent thereto.

The amount of water that is usually added to the dispersion of the starch or the combination of starches in the ionic liquid is such to obtain a content of the starch or the combination of starches in the dispersion of between about 2 wt.% and about 30 wt.%, preferably between about 3 wt.% and about 20 wt.%, more preferably between about 4 wt.% and about 15 wt.%, more preferably between about 5 wt.% and about 10 wt.%. In an embodiment the content is about 5 wt.%. In another embodiment the content is about 10 wt.%.

The water-soluble solvent is preferably ethanol.

The addition of a water-soluble solvent is usually carried out slowly, and in lab scale dropwise.

Generally, the subsequent addition of a water-soluble solvent takes place at a lower temperature than that used for preparing the dispersion. Typically, the temperature is reduced to between about 50 °C and about 90 °C, preferably between about 60 °C and about 80 °C, more preferably between about 65 °C and about 75 °C, and yet more preferably to about 70 °C.

The amount of water-soluble solvent used to precipitate is determined by routine experiments of the person skilled in the art. Typically, it is used a volume corresponding to twice the amount of water.

The precipitation generally takes some hours to be complete, and usually it is maintained overnight.

### Isolation

The process of the present invention comprises the step of isolating the precipitate obtained by the addition of water and a water-soluble solvent to the dispersion of the starch or a combination of starches in an ionic liquid.

The isolation of the precipitated starch or combination of starches is carried out generally by standard methods well known by the person skilled in the art. For example, isolation may be carried out by centrifuging, typically at between 3000 and 6000 rpm, preferably between 4000 and 5000 rpm, and more preferably at about 4500 rpm, during a period of time of between about 5 min and 20 min, preferably between about 7 and 15 min, and more preferably about 10 min.

The centrifugation leads to a supernatant, comprising the ionic liquid, water and water-soluble solvent, and to a sediment. The supernatant is discarded and the sediment is washed with the water-soluble solvent several times, for example, 2-5 times, preferable at least 3 times, until complete removal of the ionic liquid, which can be detected by infrared spectroscopy.

The recovered ionic liquid may be recycled and used in further batches of the process.

The isolation step of the precipitated starch or combination of starches comprises further a vacuum filtration and a drying step of the precipitate, typically in an oven at a temperature comprised between about 60 °C and about 100 °C, preferably between about 70 °C and about 90 °C, and more preferably at about 80 °C. Usually the drying is carried out under vacuum, for example, at a pressure of between about 40 mbar (4 kPa) and about 100 mbar (10 kPa), preferably of between about 50 mbar (5 kPa) and about 80 mbar (8 kPa), and more preferably of between about 55 mbar (5.5 kPa) and about 65 mbar (6.5 kPa). In a preferred embodiment drying of the precipitated starch or combination of starches is carried out at 80 °C and 60 mbar (6 kPa).

### Carbonization

The last step of the process of the invention comprises the carbonization of the isolated precipitate of starch or combination of starches.

Carbonization is typically carried out in a furnace capable of attaining the higher temperatures required. According to one embodiment, carbonization conditions comprise a temperature preferably between about 500 °C and about 1200 °C, more preferably between about 600 °C and about 1100 °C, more preferably between about 700 °C and about 900 °C, and yet more preferably at about 800° C.

Carbonization conditions are preferably maintained for an interval of time between about 1 and about 10 hours.

Carbonization may be carried out using a heating program comprising a sequence of heating ramps. In the context of the present invention, the ramp time refer to the rate at which the mixture is heated between the initial and final temperatures, for example, between 0.1 ° C/min and 10 °C/min, or any intermediate value within these values, such as 0.1, 0.2, 0.3, 0.5, 1, 2, 3, 5, 8 or 10 °C/min. A specific ramp time assumes a constant heating rate.

In a preferred embodiment, carbonization takes place according to the following heating program:
1) From room temperature to 100 °C: 5 °C/min
2) From 100 °C to 210 °C: 0.3 °C/min
3) From 210 °C to 400 °C: 0.3 °C/min
4) From 400 °C to 600 °C: 1 °C/min
5) From 600 °C to 800 °C: 3 °C/min

In a preferred embodiment, the carbonization process is maintained 1 h at 100 °C before heating up to 210 °C, 1 h at 210 °C before heating up to 400 °C, and after reaching 800 °C the carbonized material is let to arrive at room temperature. Thus, in a preferred embodiment, the whole carbonization process lasts at least about 20 h.

Carbonization is preferably carried out under an inert atmosphere, such as nitrogen or the noble gases. Preferably, carbonization is carried out under an inert atmosphere of argon. Carbonization conditions may further comprise a preferred gas flow rate. That is, the atmosphere comprising carbonization conditions may be swept through the carbonization furnace at a given flow rate. In an embodiment, the flow rate of the inert gas is between about 5 mL/h and about 200 mL/h, preferably selected from 10 20, 30, 40, 50, 75, 100, 125, 150, or 175 mL/h, and more preferably it is 10 mL/h.

The pressure employed in the carbonization step is typically ambient (e.g., around 1 atm). In some embodiments it may be preferred to use a higher pressure (e.g., above 1 atm, such as 2, 5, 10, 20, 50, or 100 atm, or within a range therein). In other embodiments, it may be preferred to use a lower pressure (e.g., below 1 atm, such as 0.5, 0.1, 0.05, or 0.01 atm, or within a range therein). Preferably, the carbonization process is carried out at 1 atm.

The total pore volume is determined by Nitrogen adsorption isotherm at 77 K with a Nova 2200e equipment (Quantachrome Instruments). The specific surface area of the samples was calculated by BET method within the relative pressure range of 0.05 to 0.2. The percentage of mesoporosity is measured using the t-plot method.

Well known techniques such as electron microscopy (HRSEM and TEM) and spectroscopic probing can be used to study the surface structure, energy and chemistry.

### Further steps

In a preferred embodiment, the process of the invention comprises further steps between the isolation of the precipitate comprising the starch or the combination of starches and the carbonization.

These additional steps are carried out after the isolation of the precipitated starch of combination of starches and before the carbonization step.

These additional steps comprise:
i. dispersing the isolated starch or combination of starches obtained in step c) in water,
ii. sonicating the dispersion obtained in step i),
iii. retrograding the sonicated dispersion obtained in step ii),
iv. freeze-drying the retrograded dispersion obtained in step iii) after adding thereto *tert*-butyl alcohol and subsequently p-toluenesulfonic acid.

Thus, in a preferred embodiment the process comprises:
a) dispersing a starch or a combination of starches in an ionic liquid to obtain a dispersion,
b) precipitating the starch or the combination of starches by of addition of water and subsequently a water-soluble solvent to the dispersion obtained in step a),
c) isolating the precipitate obtained in step b),
   i. dispersing the isolated starch or combination of starches obtained in step c) in water
   ii. sonicating the dispersion obtained in step i),
   iii. retrograding of the sonicated dispersion obtained in step ii),
   iv. freeze-drying the retrograded dispersion obtained in step iii) after adding thereto *tert*-butyl alcohol and subsequently p-toluenesulfonic acid, and
d) carbonizing the freeze-dried dispersion obtained in step vi).

### Dispersion

In step i) the isolated starch or combination of starches obtained in step c) of the process of the invention is dispersed in water.

The dispersion of starch or combination of starches in water is usually carried out under mechanical stirring, preferably under strong magnetic stirring. Generally, the dispersion takes place at room temperature. Usually the dispersion is accomplished within 1/2 to 5 h, preferably 1 to 2 h, and more preferably in 1 h. In a preferred embodiment the dispersion takes place under strong mechanical stirring at room temperature and during about 1 h.

In the dispersion process, the content of starch or combination of starches in the dispersion is between 5 wt.% and 50 wt.%, preferably between 7 wt.% and 30 wt.%, and more preferably between 10 wt.% and 20 wt.%, In an embodiment the content is about 10 wt.%.

### Sonication

In this step, the aqueous dispersion of the starch or the combination of starches is sonicated.

Sonication is the action of applying sound energy to agitate particles in a sample. It is usually applied using an ultrasonic bath or an ultrasonic probe, which is known in the art as sonicator. Ultrasonic probes are commercially available, for example, 750 Watt Ultrasonic Processors VCX 750 (Sonics and Materials, Inc).

In a preferred embodiment the applied energy in the sonication step is comprised between 1000 J and 5000 J, preferably between 1500 J and 4000 J, more preferably between 2000 and 3000 J, and yet more preferably about 2200 J.

The energy is typically applied during a period of time comprised between 5 min and 60 min, preferably between 10 min and 40 min, and more preferably between 15 min and 30 min.

The temperature of the sonicated dispersion usually increases, and values comprised between 60 °C and 80 °C may be observed.

In a preferred embodiment, the energy of sonication is 2200 J, applied in 15 minutes.

### Retrogradation

In this step of the process, the sonicated aqueous dispersion of starch or combination of starches is retrograded.

Retrogradation is a process that takes place when the amylose and amylopectin chains in cooked, gelatinized starch realign themselves as the cooked starch cools. When native starch is heated and dissolved in water, the crystalline structure of amylose and amylopectin molecules is lost and they hydrate to form a viscous solution. If the viscous solution is cooled or left at lower temperature for a long enough period, the linear molecules, amylose, and linear parts of amylopectin molecules retrograde and rearrange themselves again to a more crystalline structure. The linear chains place themselves parallel and form hydrogen bridges. In viscous solutions the viscosity increases to form a gel.

Typically, retrogradation is carried out at a temperature comprised between -10 °C and 10 °C, preferably between 0 °C and 8 °C, more preferably between 3 °C and 6 °C, and yet more preferably at about 5 °C. The period of time for retrogradation is usually comprised between 1 day and 5 days, preferably between 2 days and 4 days. In a preferred embodiment retrogradation is carried out at 5 °C for 2 days.

### Freeze-drying

The retrograded starch or combination of starches is freeze-dried after the addition of *tert*-butyl alcohol and subsequently p-toluenesulfonic acid to the retrograded starch dispersion.

*tert*-butyl alcohol is added to the retrograded starch or combination of starches under stirring in a rotatory mixer at low speed rotation, for example about 5 rpm, and during a period of time comprised between ½ h and 2 h, preferably for 1 h. The stirring with this rotatory mixer is carried out to prevent the destruction of the structure of the retrograded starch or combination of starches.

The amount of *tert*-butyl alcohol added is between about 10 wt.% and 50 wt.% with respect to the content of water, preferably between 20 wt.% and 40 wt.%, and more preferably about 30 wt.%. The content of water substantially corresponds to the water used in the preparation of the aqueous dispersion in step i). However, if any water is lost due to the sonication process, the amount of *tert*-butyl alcohol is adjusted correspondingly.

In a preferred embodiment, it is added 30 wt.% of *tert*-butyl alcohol with respect to the amount of water content, and it is stirred in a rotatory mixer for about 1 h at about 5 rpm.

*p*-toluenesulfonic acid, which acts as a carbonization catalyst, is added to the hydroalcoholic dispersion of the retrograded starch or combination of starches under stirring in a rotatory mixer at low speed rotation, for example about 5 rpm, and during a period of time comprised between ½ h and 2 h, preferably for 1 h.

The amount of p-toluenesulfonic acid added is between about 1 wt.% and 5 wt.% with respect to the content of starch or combination of starches. In a preferred embodiment 1 wt.%, 2 wt.%, 3 wt.%, 4 wt.% or 5 wt.% of p-toluenesulfonic acid is used.

The dispersion of retrograded starch or combination of starches comprising *tert*-butyl alcohol and p-toluenesulfonic acid is frozen, for example, using liquid nitrogen, and freeze-dried in a freeze-drier, under conditions well-known by the skilled person in the art, for example, at room temperature and vacuum of 0.02 mbar (0.002 kPa). The time for freeze-drying is usually at least 1 day, preferably at least 2 days. In a preferred embodiment, freeze-drying is performed during 2 days.

### Carbonization

The last step of the preferred embodiment of the process of the invention comprises the carbonization of the freeze-dried starch or combination of starches.

Carbonization may be carried out under the conditions exposed above in the previous section "Carbonization".

### Mesoporous carbon material

The mesoporous carbon material obtainable according to the process of the invention also forms part of the invention.

The product obtained after the carbonization step is typically a black powder of mesoporous carbon material.

The mesoporous carbon material obtained according to the process of the invention is characterized by a BET surface area values generally comprised between 300 m²/g and 600 m²/g, typically between 400 m²/g and 525 m²/g, a total pore volume generally comprised between 0.27 cm³/g and 0.87 cm³/g, typically between 0.35 cm³/g and 0.70 cm³/g, and a percentage of mesoporosity generally comprised between 45% and 80%, typically 55% and 75%.

The mesoporous carbon material of the invention is usually stable in boiling toluene, boiling water, and in acid and base solutions.

The mesoporous carbon material is usually at least partially electrically conductive. More particularly the material preferably has a specific resistance of not more than 10 Ω.cm⁻¹, more preferably of not more than 1 Ω.cm⁻¹ and especially of not more than 0.1 Ω.cm⁻¹.

The mesoporous carbon material may be in different physical forms, such as, for example, powder, beads, cloth or monolith.

### Use

It is an aspect of the object of the invention, the use of the mesoporous carbon material obtained or obtainable according to the process of the invention.

The mesoporous carbon material of the present invention can be used in a number of applications where carbons, mesoporous materials and mesoporous carbons in particular find use.

These applications include among others, separation, filtration, trapping, catalysis, energy storage, energy generation, and in composites.

For example, it can be used as stationary phases for example in liquid chromatography including high pressure liquid chromatography (HPLC).

It can also be used in catalysis, including their use as catalyst supports. For example, precious metals or metal complexes can be immobilised on the mesoporous carbon material and the resulting supported metals can be used as catalysts in gas and liquid phase reactions including those of organic molecules.

In a preferred embodiment the mesoporous carbon material is used in separation, filtration, trapping, catalysis, energy storage, energy generation, and composites.

The present invention comprises the following embodiments:
1.- Process for preparing mesoporous carbon, characterized in that it comprises:
   a) dispersing a starch or a combination of starches in an ionic liquid to obtain a dispersion,
   b) precipitating the starch or the combination of starches by of addition of water and subsequently a water-soluble solvent to the dispersion obtained in step a),
   c) isolating the precipitate obtained in step b), and
   d) carbonizing the isolated precipitate obtained in step c).
2.- Process according to embodiment 1, characterized in that the starch is selected from maize starch, potato starch, wheat starch, tapioca starch, high amylose maize starch, and mixtures thereof.
3.- Process according to embodiment 2, characterized in that the starch is selected from maize starch, high amylose maize starch, and mixtures thereof.
4.- Process according to any one of embodiments 1 to 3, characterized in that the starch the starch or combination of starches has an amylose content of at least 20 wt.%, more preferably at least 30 wt.%, more preferably at least 60 wt.%, and yet more preferably between 60 wt.% and 70 wt.%.
5.- Process according to any one of embodiments 1 to 4, characterized in that the ionic liquid has the general formula (X^{+a})ₓ (Y^{-b} )_{y} , wherein the variables a and b are, independently, non-zero integers, and the subscript variables x and y are, independently, non-zero integers, such that a·x=b·y and at least one of X⁺ or Y⁻ possesses at least one carbon-nitrogen unsaturated bond.
6.- Process according to embodiment 5, characterized in that the X⁺ portion of the ionic liquid includes a nitrogen-containing ring.
7.- Process according to embodiment 6, characterized in that the nitrogen-containing ring is selected from azacyclopropyl (aziridinyl or dimethyleneiminyl), azacyclobutyl (azetidinyl or trimethyleneiminyl), pyrrolidinyl, pyrrolyl, imidazolyl, imidazolidinyl, oxazolyl, pyrazolyl, piperidinyl, piperazinyl, morpholinyl, pyridinyl, pyrimidinyl, pyrazinyl, triazinyl, triazacyclohexyl, azacycloheptyl (homopiperidinyl), azacylooctyl, indolyl, benzimidazolyl, purinyl, quinolinyl, decahydroquinolinyl, and bipyridyl rings.
8.- Process according to embodiment 7, characterized in that the nitrogen-containing ring of the ionic liquid is an imidazolium ring.
9.- Process according to any one of embodiments 1 to 8, characterized in that the anionic species Y⁻ of the ionic liquid is selected from halides, carbonate, bicarbonate, carboxylates, hexafluorophosphate, hexachlorophosphate, perchlorate, chlorate, chlorite, perbromate, bromate, bromite, periodiate, iodate, alkoxides, amides, diketonates, aluminum halides, nitrate, nitrite, sulfate, bisulfate, sulfite, bisulfate, the sulfonates, phosphate, hydrogenphosphate, dihydrogenphosphate, pyrophosphate, phosphite, arsenate, hydrogenarsenate, dihydrogenarsenate, selenate, tellurate, tungstate, molybdate, chromate, silicate, and borates.
10.- Process according to embodiment 9, characterized in that the anionic species Y⁻ of the ionic liquid is selected from halides and carboxylates.
11.- Process according to embodiment 10, characterized in that the anionic species Y⁻ of the ionic liquid is selected from chloride, bromide and acetate, preferably from chloride and acetate, and more preferably is chloride.
12.- Process according to embodiment 1, characterized in that the ionic liquid is selected from 1-butyl-3-methylimidazolium chloride (BMIMCI), 1-butyl-3-methylimidazolium acetate (BMIMAc), 1-butyl-3-methylimidazolium bromide, 1-butyl-3-methylimidazolium methyl sulfate, 1-butyl-3-methylimidazolium hexafluorophosphate, 1-butyl-3-methylimidazolium tetrafluoroborate, 1-butyl-3-methylimidazolium bis(trifluoromethylsulfonyl)imide, 1-butyl-3-methylimidazolium octyl sulfate, 1-butyl-2,3-dimethylimidazolium chloride, 1-butyl-2,3-dimethylimidazolium tetrafluoroborate, 1-ethyl-3-methylimidazolium chloride (EMIMCI), 1-ethyl-3-methylimidazolium acetate (EMIMAc), 1-ethyl-3-methyl-imidazolium 1,1,2,2-tetrafluoroethanesulfonate, 1-ethyl-3-methylimidazolium bis(tri-fluoromethylsulfonyl)imide, 1-ethyl-3-methylimidazolium trifluoromethanesulfonate, 1-methyl-3-octylimidazolium chloride, 1-hexyl-3-methylimidazolium chloride, 1-hexyl-3-methylimidazolium bis(trifluormethylsulfonyl)imide, 1-hexyl-3-methylimidazolium hexafluorophosphate1,3-diethoxyimidazolium bis(trifluoromethylsulfonyl)imide, 1,3-dimethoxyimidazolium hexafluorophosphate, 1,3-dimethoxy-2-methylimidazolium bis(trifluoromethylsulfonyl)imide, 1,3-dimethoxy-2-methylimidazolium hexafluorophosphate, 1,3-dihydroxy-2-methylimidazolium bis(trifluoromethylsulfonyl)imide; preferably it is selected from 1-butyl-3-methylimidazolium chloride (BMIMCI), 1-butyl-3-methylimidazolium acetate (BMIMAc), 1-ethyl-3-methylimidazolium chloride (EMIMCI), and 1-ethyl-3-methylimidazolium acetate (EMIMAc), more preferably it is selected from 1-butyl-3-methylimidazolium chloride (BMIMCI), 1-butyl-3-methylimidazolium acetate (BMIMAc), and yet more preferably it is 1-butyl-3-methylimidazolium chloride (BMIMCI).
13.- Process according to any one of embodiments 1 to 12, characterized in that the dispersion takes place at a temperature of between about 60 °C and about 100 °C, preferably between about 70 °C and about 98 °C, more preferably between about 85 °C and about 95 °C, and yet more preferably between about 90 °C and about 95 °C.
14.- Process according to any one of embodiments 1 to 13, characterized in that the dispersion is accomplished between 1 and 10 h, preferably between 3 and 9 h, more preferably between 4 and 8 h, more preferably between 5 and 7 h, and yet more preferably about 6 hours.
15.- Process according to embodiment 1, characterized in that the dispersion takes place under mechanical stirring at a temperature of about 95 °C and during about 6 h.
16.- Process according to any one of embodiments 1 to 15, characterized in that the precipitation is carry out with a content of the starch or the combination of starches in the dispersion of between about 2 wt.% and about 30 wt.%, more preferably between about 4 wt.% and about 15 wt.%, and more preferably between about 5 wt.% and about 10 wt.%.
17.- Process according to any one of embodiments 1 to 16, characterized in that the water-soluble solvent used in the precipitation is ethanol.
18.- Process according to any one of embodiments 1 to 17, characterized in that the isolation of the precipitate is carried out by centrifugation, filtration and drying.
19.- Process according to any one of embodiments 1 to 18, characterized in that the carbonization is carried out at a temperature preferably between about 500 °C and about 1200 °C, more preferably between about 600 °C and about 1100 °C, more preferably between about 700 °C and about 900 °C, and yet more preferably at about 800° C.
20.- Process according to embodiment 19, characterized in that the carbonation takes place according to the following heating program:
   1) From room temperature to 100 °C: 5 °C/min
   2) From 100 °C to 210 °C: 0.3 °C/min
   3) From 210 °C to 400 °C: 0.3 °C/min
   4) From 400 °C to 600 °C: 1 °C/min
   5) From 600 °C to 800 °C: 3 °C/min
21.- Process according to embodiment 20, characterized in that the carbonization process is maintained 1 h at 100 °C before heating up to 210 °C, 1 h at 210 °C before heating up to 400 °C, and after reaching 800 °C the carbonized material is let to arrive at room temperature.
22.- Process according to any of embodiments 1 to 20, characterized in that the process between the isolation of the precipitate comprising the starch or the combination of starches and the carbonization, comprises the following additional steps:
   i. dispersing the isolated starch or combination of starches obtained in step c) in water,
   ii. sonicating the dispersion obtained in step i),
   iii. retrograding the sonicated dispersion obtained in step ii),
   iv. freeze-drying the retrograded dispersion obtained in step iii) after adding thereto *tert*-butyl alcohol and subsequently p-toluenesulfonic acid.
23.- Mesoporous carbon material obtainable according to the process of any one of embodiments 1 to 22.
24.- Mesoporous carbon material of embodiment 23, characterized in that the mesoporous carbon material is in the forms of powder, beads, cloth or monolith.
25.- Use of the mesoporous carbon material of any of embodiments 23 or 24 in separation, filtration, trapping, catalysis, energy storage, energy generation and composites.

In the following examples, specific preparation methods of the mesoporous carbon material of the invention and comparative examples are disclosed.

### Examples

### Example 1: Preparation of mesoporous carbon material from a combination of starches containing 62 wt.% of amylose

20 g of 1-butyl-3-methylimidazolium chloride, BMIMCI (99%) were melted at 95 °C under mechanical stirring.

1.41 g of maize starch and 3.59 g of a high amylose maize starch Hylon® VII (Ingredion) was added to the melted BMIMCI. The starches were previously dried overnight at 80° C and 60 mbar. The combination of starches had a content of 62 wt.% by weight of amylose.

The mixture was maintained under mechanical agitation for 6 h at 95 °C. A viscose white dispersion comprising 20 wt.% of starch and 80 wt.% of BMIMCI was formed.

Subsequently, 75 mL of distilled water was added to the viscose dispersion, to obtain a content of 5 wt.% of starch in the final dispersion.

Temperature was reduced to 70 °C, and 150 mL of EtOH 96% (v/v) was added dropwise to the starch composition under stirring. Under these conditions, the starch precipitated. Mechanical stirring was maintained overnight to obtain a substantially complete precipitation

The precipitate was isolated by centrifuging at 4500 rpm for 10 min, washing with portions of EtOH (3 times) to remove completely the BMIMCI, filtrated under vacuum, and dried in oven overnight at 80 °C and 60 mbar.

5 g of the combination of starches was obtained as white powder.

The carbonization process was carried out under 10 mL/h Ar (g) flow and the following heating conditions:
Ramp 1: 5 °C/min to 100 °C (1 hour)
Ramp 2: 0.3 °C/min to 210 °C (1 hour)
Ramp 3: 0.3 °C/min to 400 °C
Ramp 4: 1 °C/min to 600 °C
Ramp 5: 3 °C/min to 800 °C

After reaching 800 °C, the material was let to cool to room temperature.

It was obtained 1.25 g of black mesoporous carbon material.

The recovered ionic liquid was reused at least 3 times in further examples maintaining substantially the features (S_{BET}, Total pore volume, and % of mesoporosity) the mesoporous carbon material.

An HRSEM image from the obtained mesoporous carbon material is shown in Figure 1.

### Example 2: Preparation of mesoporous carbon material from a combination of starches containing 62 wt.% of amylose

To the process disclosed in Example 1, further steps were introduced before carrying out the carbonisation process.

4 g of the combination of starches obtained in Example 1, as white powder, was dispersed into 36 g of distilled water under strong magnetic stirring for 1 hour. It was obtained a 10 wt.% dispersion of the combination of starches in water.

Sonication [ET = 2200 J; Time: 15 min; Pulses: 01 s on / 01 s off] was applied to the dispersion using a 750 Watt Ultrasonic Processors VCX 750 (Sonics and Materials, Inc)).

Sonicated dispersion was cooled at room temperature and then maintained at 5 °C for 2 days.

Afterwards, 30 wt.% of *tert*-butyl alcohol (TBA) with respect to the water content was added to the dispersion and kept for 1 hour in a rotatory mixer under low speed rotation, 5 rpm.

1 wt.% of p-toluenesulfonic acid (pTSA) with respect to the combination of starches was added to the dispersion and kept for 1 hour in a rotatory mixer under low speed rotation.

The composition was frozen using liquid nitrogen and kept 2 days into a freeze-dryer at room temperature and 0.02 mbar of pressure.

The carbonization process of the obtained mixture was carried out under 10 mL/h Ar (g) flow and the following heating conditions:
Ramp 1: 5 °C/min to 100 °C (1 hour)
Ramp 2: 0.3 °C/min to 210 °C (1 hour)
Ramp 3: 0.3 °C/min to 400 °C
Ramp 4: 1 °C/min to 600 °C
Ramp 5: 3 °C/min to 800 °C

After reaching 800 °C, the material was let to cool to room temperature.

It was obtained 1 g of black mesoporous carbon material.

### Example 3: Preparation of mesoporous carbon material from a starch containing 70 wt.% of amylose

A mesoporous carbon material was obtained following substantially the process disclosed in Example 1 using 5 g of high amylose maize starch Hylon® VII (Ingredion), containing 70 wt.% of amylose.

It was obtained 1.25 g of black mesoporous carbon material.

### Example 4: Preparation of mesoporous carbon material from a starch containing 70 wt.% of amylose

A mesoporous carbon material was obtained following substantially the process disclosed in Example 2 using 5 g of high amylose maize starch Hylon® VII (Ingredion), containing 70 wt.% of amylose.

It was obtained 1.25 g of black mesoporous carbon material.

### Examples 5 - 7: Preparation of mesoporous carbon material from a combination of starches containing 62 wt.% of amylose

A mesoporous carbon material was obtained following substantially the process disclosed in Example 1 using 1.41 g of maize starch and 3.59 g of a high amylose maize starch Hylon® VII (Ingredion). The combination of starches had a content of 62 wt.% by weight of amylose. The combination of starches was dispersed in different amounts of BMIMCI to obtain dispersions containing 5 wt.% (Example 5), 10 wt.% (Example 6) and 15 wt.% (Example 7) of the combination of starches in BMIMCI.

In each case it was obtained black mesoporous carbon material.

### Examples 8 - 11: Preparation of mesoporous carbon material from a combination of starches containing 62 wt.% of amylose

A mesoporous carbon material was obtained following substantially the process disclosed in Example 2 using 1.41 g of maize starch and 3.59 g of a high amylose maize starch Hylon® VII (Ingredion). The combination of starches had a content of 62 wt.% by weight of amylose. The combination of starches was dispersed in different amounts of BMIMCI to obtain dispersions containing 5 wt.% (Example 8), 10 wt.% (Example 9), 15 wt.% (Example 10) and 25 wt.% (Example 11) of the combination of starches in BMIMCI.

In each case it was obtained black mesoporous carbon material.

### Examples 12 - 21: Preparation of mesoporous carbon material from starch or a combination of starches having different amylose content

Mesoporous carbon materials were obtained following substantially the process disclosed in Example 2 from the starches disclosed in Table I:

**TABLE I**

| Example | Starch | Mixture ratio | wt.% amylose |
|---|---|---|---|
| 12 | Maize | 1 | 34 |
| 13 | Tapioca | 1 | 40 |
| 14 | Hylon® V | 1 | 47 |
| 15 | Hylon® VII | 1 | 70 |
| 16 | Maize + Hylon® VII | 1:0.07 | 37 |
| 17 | Maize + Hylon® VII | 1:0.40 | 45 |
| 18 | Maize + Hylon® VII | 1:1 | 52 |
| 19 | Maize + Hylon® V | 1:0.15 | 30 |
| 20 | Maize + Hylon® V | 1:1.30 | 40 |
| 21 | Maize + Hylon® V | 1:0.77 | 60 |

In all cases mesoporous carbon material was obtained.

### Comparative Example 1: Preparation of mesoporous carbon material from a combination of starches containing 62 wt.% of amylose

20 g of distilled water was heated at 95 °C under mechanical stirring.

1.41 g of maize starch and 3.59 g of a high amylose maize starch Hylon® VII (Ingredion) was added to the water. The starches were previously dried overnight at 80° C and 60 mbar. The combination of starches had a content of 62 wt.% by weight of amylose.

The mixture was maintained under mechanical agitation for 6 h at 95 °C. A viscose white dispersion comprising 20 wt.% of starch and 80 wt.% of water was formed.

The viscose white dispersion was dried by rotavaporation.

5 g of the combination of starches was obtained as white powder.

The carbonization process of was carried out under 10 mL/h Ar (g) flow and the following heating conditions:
Ramp 1: 5 °C/min to 100 °C (1 hour)
Ramp 2: 0.3 °C/min to 210 °C (1 hour)
Ramp 3: 0.3 °C/min to 400 °C
Ramp 4: 1 °C/min to 600 °C
Ramp 5: 3 °C/min to 800 °C

After reaching 800 °C, the material was let to cool to room temperature.

It was obtained 1.25 g of black mesoporous carbon material.

### Comparative Example 2: Preparation of mesoporous carbon material from a combination of starches containing 62 wt.% of amylose

To the process disclosed in Comparative Example 1, further steps were introduced before carrying out the carbonisation process.

4 g of the combination of starches obtained in Comparative Example 1, as white powder, was dispersed into 36 g of distilled water under strong magnetic stirring for 1 hour. It was obtained a 10 wt.% dispersion of the combination of starches in water.

Sonication [ET = 2200 J; Time: 15 min; Pulses: 01 s on / 01 s off] was applied to the dispersion using a 750 Watt Ultrasonic Processors VCX 750 (Sonics and Materials, Inc).

Sonicated dispersion was cooled at room temperature and then maintained at 5 °C for 2 days.

Afterwards, 30 wt.% of *tert*-butyl alcohol (TBA) with respect to the water content was added to the dispersion and kept for 1 hour in a rotatory mixer under low speed rotation, 5 rpm.

1 wt.% of p-toluenesulfonic acid (pTSA) with respect to the combination of starches was added to the dispersion and kept for 1 hour in a rotatory mixer under low speed rotation.

The composition was frozen using liquid nitrogen and kept 2 days into a freeze-dryer at room temperature and 0.02 mbar.

The carbonization process of the obtained mixture was carried out under 10 mL/h Ar (g) flow and the following heating conditions:
Ramp 1: 5 °C/min to 100 °C (1 hour)
Ramp 2: 0.3 °C/min to 210 °C (1 hour)
Ramp 3: 0.3 °C/min to 400 °C
Ramp 4: 1 °C/min to 600 °C
Ramp 5: 3 °C/min to 800 °C

After reaching 800 °C, the material was let to cool to room temperature.

It was obtained 1 g of black mesoporous carbon material.

### Comparative Example 3: Preparation of mesoporous carbon material from a starch containing 70 wt.% of amylose

A mesoporous carbon material was obtained following substantially the process disclosed in Comparative Example 1 using 5 g of high amylose maize starch Hylon® VII (Ingredion), containing 70 wt.% of amylose.

It was obtained 1.25 g of black mesoporous carbon material.

### Comparative Example 4: Preparation of mesoporous carbon material from a starch containing 70 wt.% of amylose

A mesoporous carbon material was obtained following substantially the process disclosed in Comparative Example 2 using 5 g of high amylose maize starch Hylon® VII (Ingredion), containing 70 wt.% of amylose.

It was obtained 1.25 g of black mesoporous carbon material.

### Example 22: Characterization of mesoporous carbon materials

In this example, the characteristics of different mesoporous carbon materials are shown.

The features of those mesoporous carbon materials related to the raw material (starch), the content of starch in the dispersion, and the process, are summarized in Table II, as well parameters such as BET Surface area (expressed as m²/g), total pore volume (expressed as cm³/g), and percentage of mesoporosity (expressed in %) for both mesoporous carbon materials obtained according to the process of the invention, and obtained according to comparative processes:

**TABLE II**

| Example | Starch (wt.% amylose) | wt.% starch in ionic liquid dispersion | Process | S_{BET} (m²/g) | V_{Total} (cm³/g) | Mesoporosity (%) |
|---|---|---|---|---|---|---|
| 1 | Maize + Hylon® VII (62 wt.%) | 20 | S | 335 | 0.33 | 59 |
| 2 | Maize + Hylon® VII (62 wt.%) | 20 | L | 536 | 0.87 | 80 |
| 3 | Hylon® VII (70 wt.%) | 20 | S | 511 | 0.44 | 59 |
| 4 | Hylon® VII (70 wt.%) | 20 | L | 401 | 0.50 | 72 |
| 5 | Maize + Hylon® VII (62 wt.%) | 5 | S | 359 | 0.51 | 77 |
| 6 | Maize + Hylon® VII (62 wt.%) | 10 | S | 507 | 0.65 | 73 |
| 7 | Maize + Hylon® VII (62 wt.%) | 15 | S | 575 | 0.39 | 50 |
| 8 | Maize + Hylon® VII (62 wt.%) | 5 | L | 449 | 0.52 | 69 |
| 9 | Maize + Hylon® VII (62 wt.%) | 10 | L | 507 | 0.65 | 73 |
| 10 | Maize + Hylon® VII (62 wt.%) | 15 | L | 459 | 0.57 | 70 |
| 11 | Maize + Hylon® VII (62 wt.%) | 25 | L | 475 | 0.78 | 79 |
| 12 | Maize (34 wt.%) | 20 | L | 415 | 0.27 | 52 |
| 13 | Tapioca (40 wt.%) | 20 | L | 409 | 0.32 | 45 |
| 14 | Hylon® V (47 wt.%) | 20 | L | 458 | 0.54 | 70 |
| 15 | Hylon® VII (70 wt.%) | 20 | L | 458 | 0.54 | 70 |
| 16 | Maize + Hylon® VII (37 wt.%) | 20 | L | 424 | 0.29 | 53 |
| 17 | Maize + Hylon® VII (45 wt.%) | 20 | L | 370 | 0.34 | 68 |
| 18 | Maize + Hylon® VII (52 wt.%) | 20 | L | 484 | 0.50 | 74 |
| 19 | Maize + Hylon® V (30 wt.%) | 20 | L | 470 | 0.39 | 61 |
| 20 | Maize + Hylon® V (40 wt.%) | 20 | L | 475 | 0.55 | 75 |
| 21 | Maize + Hylon® V (60 wt.%) | 20 | L | 458 | 0.46 | 72 |
| Comparative 1 | Maize + Hylon® VII (62 wt.%) | 20 wt.% in water | S | 380 | 0.20 | 16 |
| Comparative 2 | Maize + Hylon® VII (62 wt.%) | 20 wt.% in water | L | 398 | 0.25 | 32 |
| Comparative 3 | Hylon® VII (70 wt.%) | 20 wt.% in water | S | 411 | 0.21 | 14 |
| Comparative 4 | Hylon® VII (70 wt.%) | 20 wt.% in water | L | 424 | 0.23 | 11 |

Process S refers to the process comprising the steps a) dispersion, b) precipitation, c) isolation, and d) carbonization, whereas Process L refers to the process comprising the steps a) dispersion, b) precipitation, c) isolation, i) dispersion, ii) sonication, iii) retrogradation, iv) free-drying, and d) carbonization, as exposed above in the description.

It can be observed that mesoporous carbon materials prepared according to the process of the invention show a higher BET surface area, higher total pore volume, and higher % of mesoporosity than the process without the IL. Moreover, the use of IL offers the possibility to obtain mesoporous carbons without the need to do the sonication and the freeze-drying steps. Additionally, the IL can be recovered and reused without loss of activity.

## Claims

1. Process for preparing mesoporous carbon, **characterized in that** it comprises:
a) dispersing a starch or a combination of starches in an ionic liquid to obtain a dispersion,
b) precipitating the starch or the combination of starches by of addition of water and subsequently a water-soluble solvent to the dispersion obtained in step a),
c) isolating the precipitate obtained in step b), and
d) carbonizing the isolated precipitate obtained in step c).

2. Process according to claim 1, **characterized in that** the starch is selected from maize starch, potato starch, wheat starch, tapioca starch, high amylose maize starch, and mixtures thereof.

3. Process according to claims 1 or 2, **characterized in that** the starch the starch or combination of starches has an amylose content of at least 20 wt.%, more preferably at least 30 wt.%, more preferably at least 60 wt.%, and yet more preferably between 60 wt.% and 70 wt.%.

4. Process according to any one of claims 1 to 3, **characterized in that** the ionic liquid has the general formula (X^{+a})ₓ (Y^{-b} )_{y} , wherein the variables a and b are, independently, non-zero integers, and the subscript variables x and y are, independently, non-zero integers, such that a·x=b·y and at least one of X⁺ or Y⁻ possesses at least one carbon-nitrogen unsaturated bond.

5. Process according to claim 4, **characterized in that** the X⁺ portion of the ionic liquid includes a nitrogen-containing ring.

6. Process according to any one of claims 1 to 5, **characterized in that** the anionic species Y⁻ of the ionic liquid is selected from halides, carbonate, bicarbonate, carboxylates, hexafluorophosphate, hexachlorophosphate, perchlorate, chlorate, chlorite, perbromate, bromate, bromite, periodiate, iodate, alkoxides, amides, diketonates, aluminum halides, nitrate, nitrite, sulfate, bisulfate, sulfite, bisulfate, the sulfonates, phosphate, hydrogenphosphate, dihydrogenphosphate, pyrophosphate, phosphite, arsenate, hydrogenarsenate, dihydrogenarsenate, selenate, tellurate, tungstate, molybdate, chromate, silicate, and borates.

7. Process according to claim 6, **characterized in that** the anionic species Y⁻ of the ionic liquid is selected from halides and carboxylates.

8. Process according to claim 1, **characterized in that** the ionic liquid is selected from 1-butyl-3-methylimidazolium chloride (BMIMCI), 1-butyl-3-methylimidazolium acetate (BMIMAc), 1-butyl-3-methylimidazolium bromide, 1-butyl-3-methylimidazolium methyl sulfate, 1-butyl-3-methylimidazolium hexafluorophosphate, 1-butyl-3-methylimidazolium tetrafluoroborate, 1-butyl-3-methylimidazolium bis(trifluoromethylsulfonyl)imide, 1-butyl-3-methylimidazolium octyl sulfate, 1-butyl-2,3-dimethylimidazolium chloride, 1-butyl-2,3-dimethylimidazolium tetrafluoroborate, 1-ethyl-3-methylimidazolium chloride (EMIMCI), 1-ethyl-3-methylimidazolium acetate (EMIMAc), 1-ethyl-3-methylimidazolium 1,1,2,2-tetrafluoroethanesulfonate, 1-ethyl-3-methylimidazolium bis(trifluoromethylsulfonyl)imide, 1-ethyl-3-methylimidazolium trifluoromethanesulfonate, 1-methyl-3-octylimidazolium chloride, 1-hexyl-3-methylimidazolium chloride, 1-hexyl-3-methylimidazolium bis(trifluormethylsulfonyl)imide, 1-hexyl-3-methylimidazolium hexafluorophosphate1,3-diethoxyimidazolium bis(trifluoromethylsulfonyl)imide, 1,3-dimethoxyimidazolium hexafluorophosphate, 1,3-dimethoxy-2-methylimidazolium bis(trifluoromethylsulfonyl)imide, 1,3-dimethoxy-2-methylimidazolium hexafluorophosphate, 1,3-dihydroxy-2-methylimidazolium bis(trifluoromethylsulfonyl)imide; preferably it is selected from 1-butyl-3-methylimidazolium chloride (BMIMCI), 1-butyl-3-methylimidazolium acetate (BMIMAc), 1-ethyl-3-methylimidazolium chloride (EMIMCI), and 1-ethyl-3-methylimidazolium acetate (EMIMAc), more preferably it is selected from 1-butyl-3-methylimidazolium chloride (BMIMCI), 1-butyl-3-methylimidazolium acetate (BMIMAc), and yet more preferably it is 1-butyl-3-methylimidazolium chloride (BMIMCI).

9. Process according to any one of claims 1 to 8, **characterized in that** the dispersion takes place at a temperature of between about 60 °C and about 100 °C, preferably between about 70 °C and about 98 °C, more preferably between about 85 °C and about 95 °C, and yet more preferably between about 90 °C and about 95 °C.

10. Process according to any one of claims 1 to 9, **characterized in that** the precipitation is carry out with a content of the starch or the combination of starches in the dispersion of between about 2 wt.% and about 30 wt.%, more preferably between about 4 wt.% and about 15 wt.%, and more preferably between about 5 wt.% and about 10 wt.%.

11. Process according to any one of claims 1 to 10, **characterized in that** the carbonization is carried out at a temperature preferably between about 500 °C and about 1200 °C, more preferably between about 600 °C and about 1100 °C, more preferably between about 700 °C and about 900 °C, and yet more preferably at about 800° C.

12. Process according to claim 11, **characterized in that** the carbonation takes place according to the following heating program:
1) From room temperature to 100 °C: 5 °C/min
2) From 100 °C to 210 °C: 0.3 °C/min
3) From 210 °C to 400 °C: 0.3 °C/min
4) From 400 °C to 600 °C: 1 °C/min
5) From 600 °C to 800 °C: 3 °C/min

13. Process according to any of claims 1 to 12, **characterized in that** the process between the isolation of the precipitate comprising the starch or the combination of starches and the carbonization, comprises the following additional steps:
i. dispersing the isolated starch or combination of starches obtained in step c) in water,
ii. sonicating the dispersion obtained in step i),
iii. retrograding the sonicated dispersion obtained in step ii),
iv. freeze-drying the retrograded dispersion obtained in step iii) after adding thereto *tert*-butyl alcohol and subsequently p-toluenesulfonic acid.

14. Mesoporous carbon material obtainable according to the process of any one of claims 1 to 13.

15. Use of the mesoporous carbon material of claim 14 in separation, filtration, trapping, catalysis, energy storage, energy generation and composites.
